# EUROPEAN PATENT APPLICATION

(11) **EP 2 811 243 A1**
(43) Date of publication of application: **10.12.2014**
(21) Application number: 13171140.0
(22) Date of filing: 07.06.2013
(51) Int. Cl.: F25D 11/00

(54) **Transport container for distribution of agricultural produce**

(71) Applicant: Garratt, Alan, West Thurrock Essex RM19 1NZ (GB)
(72) Inventor: Garratt, Alan, West Thurrock, Essex RM19 1NZ (GB); Turbitt, Neil, Rayleigh, Essex SS6 9PP (GB)
(74) Representative: Messulam, Alec Moses

(57) **Abstract**

A transport container (10) is disclosed for distribution of agricultural produce. The container has a sealed controlled environment for ripening the produce while in transit and/or while stationed in a depot, and comprises
• a plurality of fans (20) for circulating air over pallets of the produce,
• an air conditioning system for maintaining the air circulated by the fans at a desired temperature, and
• a doping system for maintaining the proportion of a ripening agent in the circulated air at a desired level.

## Description

### Field of the invention

The present invention relates to a transport container for distribution of agricultural produce, having a sealed controlled environment for ripening the produce while in transit and/or while stationed in a depot.

### Background of the invention

The task of distributing certain agricultural produce, for example bananas, and ensuring that the produce arrives in stores in a state of peak ripeness is a highly complex one. In particular, one needs to take into account the time between the produce being picked and its delivery to the stores as well as the conditions (temperature, humidity etc) to which the produce is subjected while in transit. Delays in transportation and/or changes in atmospheric conditions can result in produce rotting while it is still in transit.

In the case of bananas, the fruit is intentionally picked in an unripe state and shipped to a ripening depot where it arrives while still unripe. There, the fruit is ripened under controlled conditions and when nearly ripe it is delivered by road to the stores. Ripening is performed by circulating air containing a controlled amount of a ripening agent, typically ethylene, over the fruit while accurately monitoring the temperature of the air. In this way, ripening can be accelerated.

Currently, distribution lorries transport the produce to the ripening depots and there they have to be unloaded and transferred to the ripening chambers. Once ready for sale, the produce is again loaded onto lorries and transported to the stores directly or to a warehouse from which they are later transferred to the stores. The transfer and stacking of pallets containing the produce is a labour intensive task that adds to the overcall cost of the produce. Furthermore, companies involved in the importation and distribution of produce, for example large chains of supermarkets, do not own ripening depots and have to pay the specialist ripening companies who own the depots, this adding still further to the cost of the produce.

### Summary of the invention

With a view to mitigating at least some of the foregoing disadvantages, the present invention provides a transport container for distribution of agricultural produce, having a sealed controlled environment for ripening the produce while in transit and/or while stationed in a depot, the container comprising
- a plurality of fans for circulating air over pallets of the produce,
- an air conditioning system for maintaining the air circulated by the fans at a desired temperature, and
- a doping system for maintaining the proportion of a ripening agent in the circulated air at a desired level.

The transport container of the present invention doubles as a controlled environment ripening chamber. In this way, only one loading and unloading operation is required from the time that the produce is imported to the time that it is delivered to a store or warehouse. Furthermore, the total time that it takes for produce to reach the end user from the time that it is picked to the time that it reaches the stores is reduced because the transit time is not wasted but used to ripen the produce.

A further advantage of the transport container is that it may readily take into account changes in schedules, for example if a ship is held up in port to any reason, as it enables the ripening to be retarded or acceleration at will, to ensure its arrival in peak condition and with minimum delay.

In an embodiment of the invention, each fan circulates air in a transverse plane of the container and each fan is associated with a respective heat exchanger of the air conditioning system. Such an arrangement essentially enables the length of a container to be compartmented, with each compartment ripening the produce at a different rate. As well as taking into account the travel times of a container to different delivery destinations, this allows different types of produce to be ripened at the same time.

Conveniently, the fans may be longitudinally spaced from one another in a duct running lengthwise in the container roof and may blow air by way of lateral plenums to pressurised spaces defined between the pallets of the produce and the sides of the container.

The doping agent is preferably ethylene which, in an embodiment of the invention is generated by a doping system that includes an ethylene source for increasing the ethylene concentration and a ventilation system for reducing the ethylene concentration.

The ethylene source may be a generator that produces ethylene by heating ethanol in the presence of a catalyst.

The container requires electrical power in order to perform its function as a ripening chamber. While in transit on board a ship, for example, the ship may provide the necessary electrical power. However, as the transporting vehicle or vessel may not have an electrical supply, the container may include a fuel driven generator for producing electrical power to drive the fans, the air conditioning system and the doping system.

It is desirable to design the container so that its access door may be opened and closed while the container is parked against a conventional loading bay. For this reason, the access door is preferably a sealed roller shutter door.

The container is preferably also provided with a control system that enables the ripening of the produce to be controlled remotely. Thus, the container any include a GPS system and a communication system to allow data and commands to be passed in both directions between the container and a central command centre. The command centre may in this way monitor the progress of the container, constantly update its expected time of arrival at the delivery destination, and regulate the ripening conditions within the container to ensure that the produce attains its optimum state of ripening at the time of delivery.

According to a second aspect of the invention, there is provided a distribution system having a command centre and a plurality of mobile containers each capable of controlling the ripening of produce contained therein while in transit, wherein each container is in two-way communication with the command centre, the command centre is operative to send instructions to the containers to set the ripening conditions within the containers.

Preferably, the containers are operative to transmit data to the control centre indicative of the ripening conditions within the container.

Advantageously, each container further may comprise a GPS system and be operative to transit to the command centre data relating to the current position of the container.

### Brief description of the drawings

The invention will now be described further, by way of example, with reference to the accompanying drawings, in which:

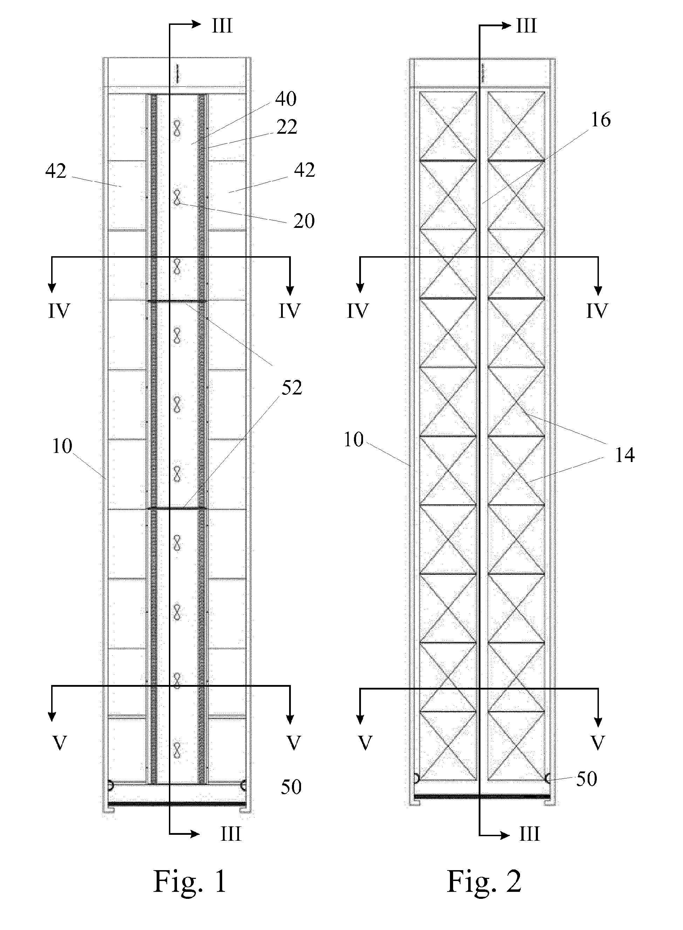

Figure 1 is a section through a container of the invention taken along the line I-I in Figure 4,
Figure 2 is a section through the container taken along the line II-II in Figure 5,

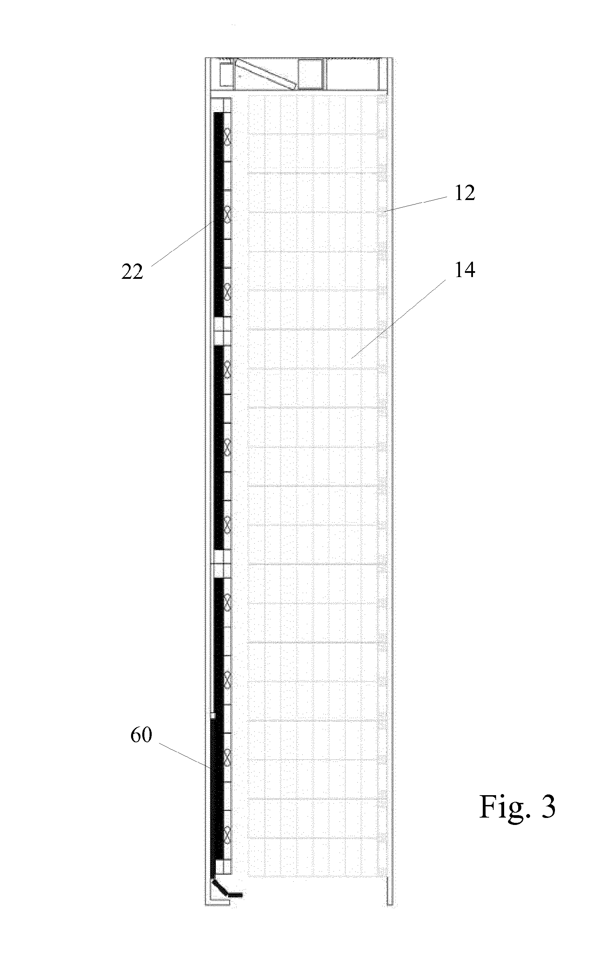

Figure 3 is a section through the container in the plane through the lines III-III in Figures 1 and 3,
Figure 4 is a section through the container in the plane through the lines IV-IV in Figures 1 and 2,
Figure 5 is a section through the container in the plane through the lines V-V in Figures 1 and 2, and
Figure 6 is a read view of the container with the rear doors open.

### Detailed description of the drawings

The exterior housing 10 of the container in the drawings is a conventional insulated shipping container. These are available in different lengths, typically 40 feet (12.2 m), 43 feet (13.1 m) and 45 feet (13.7 m). The width is standardised at 8 feet (2.44 m). A standard container has a height of 8.5 feet (2.59 m) and "high cube" container have a height of 9.5 feet (2.89 m). The selection of the length of the container determines the number of pallets that can be transported while the height is selected depending on the maximum height of the pallets to be transported.

The pallets 12 used to transport the produce are also of standard construction. Typically, each pallet 12 has a rectangular base, measuring approximately 1.2 m by 1 m, on which boxes 14 containing the produce are stacked. A stack may have eight or nine tiers of boxes and each tier, in the case of bananas, would typically include six boxes. The boxes 14 are held in place on the pallets 12 by and they have holes in their sides to allow ventilation of the produce.

When normally carried in containers, the pallets 12 are positioned with their wider dimension widthways so as to occupy the entire inner space of the container. In a ripening container, however, they are positioned with their narrower dimension widthways, as shown in the figures, to leave a central passage 16 for ventilation, as will be described below.

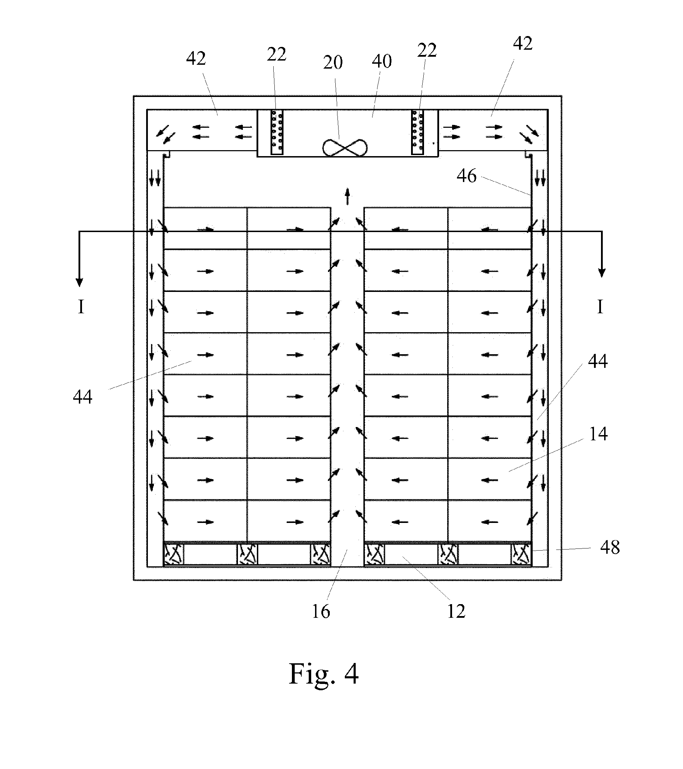

As best shown by the arrows in Figure 4, the container of the invention is designed to circulate air through the boxes 14 containing the produce. The air is at a regulated temperature and, when appropriate, can be dosed with a ripening agent, typically ethylene, to accelerate the ripening process. The ripening is retarded by reducing the temperature of the circulating air and accelerated by raising the temperature and increasing the concentration of the ripening agent. In this way, it is possible to control the ripening of the produce while it is in transit to ensure that it be in peak condition when delivered to stores.

The container 10 includes fans 20 for causing the air to circulate through the holes in the boxes 14. The fans 20 can be reversible so that the air may flow in opposite directions through the boxes to avoid the produce in one side of a box being ripened more than the other side.

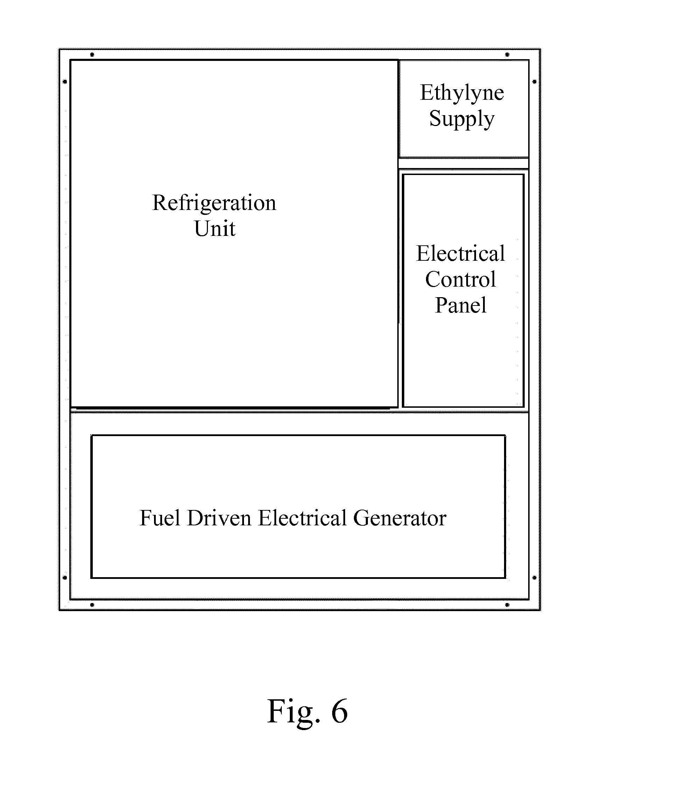

A refrigeration unit 24 arranged at the rear of the container (see Figure 6) supplies a cooled refrigerant to heat exchangers 22 in the path of the recirculating air. An ethylene supply or generator 26 also arranged in a compartment at the rear of the container 10 supplies ethylene through pipes that run along the length of the container 10. The rear compartment also includes a fuel driven electricity generator 28, and an electrical control panel 32.

A dual discharge evaporator duct 40 runs down the length of the container. The heat exchanger coils 40 are arranged on opposite sides of the duct and the fans 20 are disposed within the duct 40. The duct communicates laterally with air plenums 42 through which the air blown by the fans 20 is conducted to a space 44 between the boxes 14 and the side of the container 10. The spaces 44 need to be sealed to maintain a high pressure for forcing the air through the boxes 14. To achieve this, a sealing wall 46, made of a flexible material, is provided at the upper end of the stack of boxes 14 and, at the lower ends, the pallets 12 abut against a curb 48. Further rubber bumpers 50 seal the ends of the spaces 44.

In a preferred embodiment, the container is divided along its length into a number separate compartments within which the ripening conditions can be controlled separately, and partitions 52 may be provided between the compartments to ensure that the ripening agent does not pass between compartments.

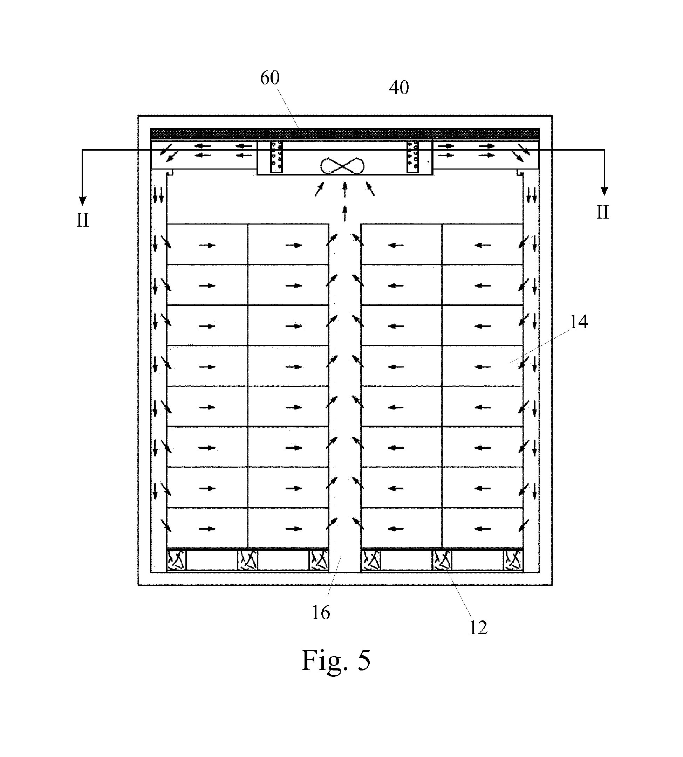

The container is fitted at its front end with a sealed roller shutter door 60 which, as shown in Figure 5, can be stored in a space above the duct 40. This allows the door to be opened while the container is positioned against a conventional unloading bay. Thus, the door can be kept closed while the produce is ripening and open to allow loading and unloading, without the need to move the container away from the loading bay.

The refrigerant flowing in the heat exchangers 22 is preferably water with an antifreeze. The water is chilled by the refrigeration circuit mounted in the rear compartment of the container. Using chilled water as a cooling medium for the internal evaporators instead of direct expansion refrigerant allows a much lower temperature differential across the internal evaporators maintaining a natural high humidity and prevents chilling of the fruit.

Airtight motorized air dampers, not shown, are provided to allow for fresh air circulation within the container when required. If the container is compartmented, then separate fresh air supplies may be provided for each compartment.

The electrical panel 32 includes a dedicated controller, to control the refrigeration system and the ripening process. The refrigeration process is controlled on demand. When demand is low the compressor will speed up and vice versa. The condenser fans will also speed up/slow down to maintain a constant head pressure. This allows for ultimate energy efficiency of the plant.

The ripening control will allow for scheduling of a complete ripening cycle allowing for setting specific dates/times for temperature set point / ethylene control / fresh air ventilation. The fan motors within the dual discharge evaporators may be electrically commutated motors which will speed up / slow down dependent on demand. This demand will be measured by monitoring the temperature differential across the cooling coil. When the temperature increases the fan motors speed up and when the temperature difference is small the fan motors slow down improving running efficiencies.

For the scheduled ventilation cycle the controller will open and close the actuators attached to the air dampers to allow for fresh air circulation.

For the scheduled ethylene cycle, the ethylene generator will be enabled starting the catalyst process within, releasing ethylene gas into the container. An ethylene sensor installed internally within the container disables the generator when the desired concentration are attained. The controller is able to monitor the status of the ethylene generator and the amount of ethanol in the reservoir.

The control system may constantly log all of the many points enabling generation of batch reports and energy usage for records after each ripening cycle.

The entire control system may be connected to a GPS modem, which will allow for monitoring and interrogation of each ripening container over a communication, such as the Internet. This will allow an end user to monitor and schedule ripening cycles from anywhere in the world and also allow for a maintenance engineer to interrogate any problems or search for a potential problem. The controller may have a list of alarm parameters which will automatically email or text someone for notification when in alarm status.

## Claims

1. A transport container for distribution of agricultural produce, having a sealed controlled environment for ripening the produce while in transit and/or while stationed in a depot, **characterised in that** the container comprises
• a plurality of fans for circulating air over pallets of the produce,
• an air conditioning system for maintaining the air circulated by the fans at a desired temperature, and
• a doping system for maintaining the proportion of a ripening agent in the circulated air at a desired level.

2. A transport container as claimed in claim 1, wherein each fan circulates air in a transverse plane of the container and each fan is associated with a respective heat exchanger of the air conditioning system.

3. A transport container as claimed in claim 1 or 2, wherein, the fans are longitudinally spaced from one another in a duct running lengthwise in the container roof and area operative to blow air by way of lateral plenums to spaces extending between the pallets of the produce and the sides of the container.

4. A transport container as claimed in any preceding claim, wherein the doping agent is ethylene.

5. A transport system as claimed in claim 4, wherein the ethylene is generated by a doping system that includes an ethylene source for increasing the ethylene concentration and a ventilation system for reducing the ethylene concentration.

6. A transport container as claimed in any preceding claim, wherein a fuel driven generator is provided for producing electrical power to drive the fans, the air conditioning system and the doping system.

7. A transport container as claimed in any preceding claim, wherein an access door is provided that is capable of being opened and closed while the container is parked against a loading bay.

8. A transport container as claimed in claim 7, wherein the access door is a sealed roller shutter door.

9. A transport container as claimed in any preceding claim, further comprising a control system to enable the ripening of the produce to be controlled remotely.

10. A transport container as claimed in claim 8, wherein the container includes a GPS system and a communication system to allow data and commands to be passed in both directions between the container and a central command centre.

11. A distribution system having a command centre and a plurality of mobile containers each capable of controlling the ripening of produce contained therein while in transit, wherein each container is in two-way communication with the command centre, the command centre is operative to send instructions to the containers to set the ripening conditions within the containers.

12. A distribution system as claimed in claim 11, wherein the containers are operative to transmit data to the control centre indicative of the ripening conditions within the container.

13. A distribution system as claimed in claim 11 or 12, wherein each container further comprises a GPS system and is operative to transit to the command centre data relating to the current position of the container.
